(19) Europäisches Patentamt
European Patent Office
Office européen des brevets

(11) **EP 2 243 585 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
***B23K 11/25*** *(2006.01)*     ***B23K 11/31*** *(2006.01)*

(21) Anmeldenummer: **10003620.1**

(22) Anmeldetag: **31.03.2010**

(54) **Verfahren und Vorrichtung zur Steuerung einer Positioniervorrichtung zum Schweißen**

Method and device for controlling a positioning device for welding

Procédé et dispositif de commande d'un dispositif de positionnement destiné au soudage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.04.2009 DE 102009018403**
            **14.10.2009 DE 102009049327**
            **14.10.2009 DE 102009049329**

(43) Veröffentlichungstag der Anmeldung:
**27.10.2010 Patentblatt 2010/43**

(73) Patentinhaber: **KUKA Deutschland GmbH**
**86165 Augsburg (DE)**

(72) Erfinder:
• **Jacob, Dirk**
**86154 Augsburg (DE)**
• **Stimmel, Burkhard**
**82547 Achmühle (DE)**
• **Thümmel, Michael**
**86163 Augsburg (DE)**
• **Weiss, Martin**
**86459 Margertshausen (DE)**

(74) Vertreter: **Schlotter, Alexander Carolus Paul et al**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 1 508 396**      **EP-A2- 1 005 943**
**DE-A1- 19 524 486**     **GB-A- 2 060 173**
**GB-A- 2 323 054**

EP 2 243 585 B1

## EP 2 243 585 B1

**Beschreibung**

Die vorliegende Erfindung betrifft ein Verfahren und eine Vorrichtung zur Steuerung einer Positioniervorrichtung, insbesondere eines Schweißroboters, zum Schweißen mit einer Schweißzange und wenigstens einer Krafterfassungseinrichtung zur Erfassung von Reaktionskräften auf die Schweißzange.

Beim Widerstandspunktschweißen (WPS) werden beispielsweise zu fügende Bleche durch zwei Schweißelektroden zusammengepresst und ein Schweißstrom durch die Elektroden und Bleche geleitet, wobei durch den erhöhten Übergangswiderstand zwischen den Blechen deren Temperatur so weit erhöht wird, dass die Bleche dort verschmelzen.

Wird dies automatisiert durch eine Positioniervorrichtung wie beispielsweise einen Schweißroboter ausgeführt, so fährt diese positionsgeregelt vorgegebene Posen an, um Schweißzange und Werkstück(e) relativ zueinander zu positionieren. Hierzu kann die Positioniervorrichtung das Werkstück und/oder die Schweißzange bewegen. Beispielsweise kann ein Schweißroboter eine robotergeführte Schweißzange an einem feststehenden Werkstück ansetzen oder umgekehrt ein gegriffenes Werkstück einer stationären Schweißzange zuführen.

Bei der Anfahrt und/oder in der Schweißpose wird durch Bewegung wenigstens einer Elektrode zur anderen Elektrode hin die Schweißzange geschlossen und ein Schweißpunkt erzeugt. Die Posen zum Setzen der Schweißpunkte können beispielsweise vorab durch manuelles Anfahren geteacht oder offline, beispielsweise auf Basis bekannter Werkstück- und Fertigungszellendaten, programmiert und zum Beispiel durch Proportional-Integral-Differential-Einzelgelenkregler angefahren werden.

Weicht nun im Betrieb die Position, i.e. Lage und/oder Orientierung, eines zu schweißenden Werkstücks relativ zu einem Werkzeugreferenzsystem der Positioniervorrichtung wie zum Beispiel dem TCP ("tool center point") eines Schweißroboters von der Position ab, bezüglich der die Pose vorgegeben wurde, da beispielsweise Bleche verformt oder ungenau in einem Zubringwerkzeug eingespannt oder Zubringwerkzeug und Positioniervorrichtung ungenau zueinander positioniert sind, versucht die Positionsregelung gewaltsam, die Referenzposition zu erreichen. Dadurch kann es, insbesondere bei hoch- und höchstfesten Blechen, zu einer Verschlechterung bzw. einem Versagen des Schweißprozesses, einer Beschädigung von Werkstück, Werkzeug und/oder Positioniervorrichtung und dergleichen kommen.

Daher werden in der Praxis bisher gezielt passive oder aktive Nachgiebigkeiten, etwa durch ein sogenanntes "Remote Center of Compliance" oder schwimmend gelagerte Schweißzangen vorgesehen, die die Schweißzange während des Schweißvorgangs von Querkräften entkoppeln. Insbesondere bei nicht stationären, geführten Schweißzangen muss zum Anfahren der nächsten Pose dieser sogenannte Zangenausgleich fixiert werden, um die Schweißzange präzise positionieren zu können. Dies bedingt schwere, aufwändige, energieverbrauchende und fehleranfällige Mechaniken.

Aus der EP 1 508 396 B1 ist es bekannt, die Andruckkraft von Elektroden einer robotergeführten Schweißzange auf Basis von Kräften zu regeln, die mittels an der Schweißzange angeordneter Sensoren erfasst wird, ohne dass dies einen Einfluss auf die Roboterpose hat.

Aus der nicht vorveröffentlichten deutschen Patentanmeldung der Anmelderin mit dem Aktenzeichen 10 2009 018 403.1 ist es bekannt, eine Achse eines Schweißroboters nachgiebig zu regeln, so dass der Roboter aufgrund einer Kontaktkraft zwischen Werkstück und Schweißzange ausweichen und so Positionstoleranzen kompensieren kann.

Die EP 1 005 943 A2 offenbart eine Schweißzange samt Steuerungssystem. Der Zangenkopf der Schweißzange besitzt dabei eine feste Zangenbacke und eine aktuierte Zangenbacke. An beiden Zangenbacken befinden sich Sensoren. Mit dem Sensor an der festen Zangenbacke kann die Position der Zangenspitze dieser Zangenbacke und die Kraft, die auf diese Zangenspitze wirkt, erfasst werden.

Aufgabe der vorliegenden Erfindung ist es, das automatisierte Schweißen zu verbessern.

Diese Aufgabe wird durch ein Verfahren mit den Merkmalen des Anspruchs 1 gelöst. Anspruch 7 stellt eine Vorrichtung, Anspruch 8 bzw. 9 ein Computerprogramm bzw. ein Computerprogrammprodukt, insbesondere einen Datenträger bzw. ein Speichermedium, zur Durchführung eines Verfahrens nach Anspruch 1 unter Schutz. Die Unteransprüche betreffen vorteilhafte Weiterbildungen.

Die vorliegende Erfindung nutzt eine beispielsweise aus der einleitend genannten EP 1 508 396 B1 bereits bekannte Anordnung von Krafterfassungseinrichtungen an einer Schweißzange erfindungsgemäß dazu, zusätzlich oder alternativ zur Zangenstellung die Pose einer Positioniereinrichtung zum Positionieren von Werkstück und Schweißzange relativ zueinander, insbesondere die Pose eines Schweißroboters, zu regeln. Dazu geht sie von der Erkenntnis aus, dass durch das Anpressen der Elektroden an das bzw. die zu schweißende(n) Werkstück(e) Reaktionskräfte auf die Schweißzange aufgeprägt werden, wobei sich Reaktionskräfte zur Erzeugung der beidseitigen Anpresskraft in ihrer Summe aufheben. Da somit bei Betrachtung der in Summe auf die Schweißzange wirkenden Reaktionskräfte nur solche Anteile verbleiben, die aus einem positionellen Versatz zwischen Werkstück und Schließpunkt der Schweißzange resultieren, kann die Pose der Positioniereinrichtung auf Basis der ermittelten Summe von Reaktionskräften so geregelt werden, dass ein solcher Versatz kompensiert oder wenigstens reduziert wird.

Sowohl eine einzelne Kraft als auch antiparallele Kräftepaare, i.e. Drehmomente, bzw. Komponenten hiervon werden zur kompakteren Darstellung verallgemeinernd als Kräfte im Sinne der vorliegenden Erfindung bezeichnet, so dass beispielsweise ein Kraftsensor auch einen Momentensensor, beispielsweise zur Erfassung von Biegemomenten, bezeichnen kann.

Als Summe von Reaktionskräften wird vorliegend insbesondere die Resultierende aus zwei oder mehr einzelnen Reaktionskräften oder -kraftkomponenten bezeichnet, die von einem zu schweißenden Werkstück auf die Schweißzange, insbesondere ihre Elektroden ausgeübt werden, beispielsweise die Resultierende auf die gegeneinander gespannten Schweißelektroden in Schließrichtung der Schweißzange und/oder senkrecht hierzu. Bei vorzeichenfreier, betragsmäßiger Betrachtung kann entsprechend auch die Differenz zweier entgegengerichteten Reaktionskräfte eine Summe von Reaktionskräften im Sinne der vorliegenden Erfindung bilden.

Gemäß einer bevorzugten Ausführung wird daher die Summe von Reaktionskräften auf Basis einer Differenz zwischen Reaktionskräften ermittelt, die insgesamt oder in vorgegebener Richtung, insbesondere Schließrichtung, auf zwei Elektroden der Schweißzange wirken. Dann kann eine Schweißpose der Positioniervorrichtung so geregelt werden, dass diese verringert, insbesondere minimiert wird.

Erfndungsgemäß wird die Summe von Reaktionskräften auf Basis von Kräften ermittelt, die zwischen der Schweißzange und ihrer Anbindung bzw. Lagerung, insbesondere einer inertialen Lagerung einer stationären Schweißzange oder zwischen einer geführten Schweißzange und der sie lagernden bzw. führenden Positioniervorrichtung wirken. Denn auf eine geführte Schweißzange wirkende Reaktionskräfte erzeugen als Resultierende eine entsprechende Kraft zwischen der Schweißzange und einer sie führenden Positioniervorrichtung, insbesondere deren Werkzeugflansch bzw. Schweißzangenkonsole. Entsprechend erzeugen auf eine stationäre Schweißzange wirkende Reaktionskräfte als Resultierende eine entsprechende Kraft zwischen der Schweißzange und ihrer inertialen Anbindung. Ohne positionellen Versatz heben sich die gegensinnigen Reaktionskräfte, die aus der beidseitig gleichmäßigen Anpresskraft resultieren, gegenseitig auf, so dass zwischen der Schweißzange und ihrer jeweiligen Anbindung keine Kräfte übertragen werden. Dementsprechend kann eine Schweißpose der Positioniervorrichtung so geregelt werden, dass die Kraft, die zwischen der Schweißzange und ihrer Anbindung, insbesondere zwischen der Schweißzange und der Positioniervorrichtung wirkt, verringert, insbesondere minimiert wird.

Bei vorstehender Erläuterung wurden Gewichtskräfte der Schweißzange nicht berücksichtigt, die auch bei offener oder in korrekter Position geschlossener Schweißzange eine Kraft zwischen der Schweißzange und ihrer Anbindung, insbesondere zwischen einer geführten Schweißzange und einer sie führenden Positioniervorrichtung, aufprägen, jedoch keine Reaktionskräfte im Sinne der technischen Mechanik sind. Dem kann dadurch Rechnung getragen werden, dass diese Kräfte vorab bestimmt und bei der Ermittlung der Summe von Reaktionskräften entsprechend berücksichtigt, beispielsweise hinzuaddiert bzw. subtrahiert werden.

Gemäß einer bevorzugten Ausführung können Reaktionskräfte, die zum Ermitteln der Summe von Reaktionskräften für die Posenregelung der Positioniervorrichtung genutzt werden, auch zur Ermittlung und Regelung der Schweiß- bzw. Anpresskraft genutzt werden, i.e. derjenigen Kraft, mit der die beiden Elektroden gegeneinander bzw. beidseitig gegen das bzw. die zu schweißende(n) Werkstück(e) gepresst werden. Werden beispielsweise zum Ermitteln der Summe von Reaktionskräften Reaktionskräfte auf eine oder beide Elektroden der Schweißzange ermittelt, kann hieraus auch die tatsächlich aufgebrachte Schweißkraft ermittelt und durch Vergleich mit einer Soll-Schweißkraft geregelt werden.

Vorzugsweise erfolgt die Regelung der Positioniervorrichtung auf Basis der ermittelten Summe von Reaktionskräften nur in der Nähe der anzufahrenden Pose oder bei angefahrener Pose, insbesondere, während die Schweißzange geschlossen oder geöffnet wird und/oder solange die Schweißzange geschlossen ist.

Reaktionskräfte können beispielsweise mittels eines oder mehrerer Drucksensoren, insbesondere Piezosensoren und/oder mittels eines oder mehrerer Verformungssensoren, insbesondere Dehnmessstreifen ermittelt werden. Gleichermaßen ist es möglich, Reaktionskräfte mittels Energiesensoren, beispielsweise Stromsensoren, zu ermitteln, die zum Beispiel die Leistung von Aktuatoren bzw. Antriebsmotoren erfassen.

Weitere Vorteile und Merkmale ergeben sich aus den Unteransprüchen und den Ausführungsbeispielen. Hierzu zeigt, teilweise schematisiert:

Fig. 1:     einen Schweißroboter mit einer Steuerung nach einer Ausführung der vorliegenden Erfindung;

Fig. 2:     die geöffnete Schweißzange des Schweißroboters nach Fig. 1 in vergrößerter Darstellung beim Anfahren zu verschweißender Werkstücke mit positionellem Versatz;

Fig. 3:     die Schweißzange nach Fig. 2 in geschlossenem Zustand; und

Fig. 4:     die Schweißzange nach Fig. 3 bei ausgeregelter Pose des Roboters.

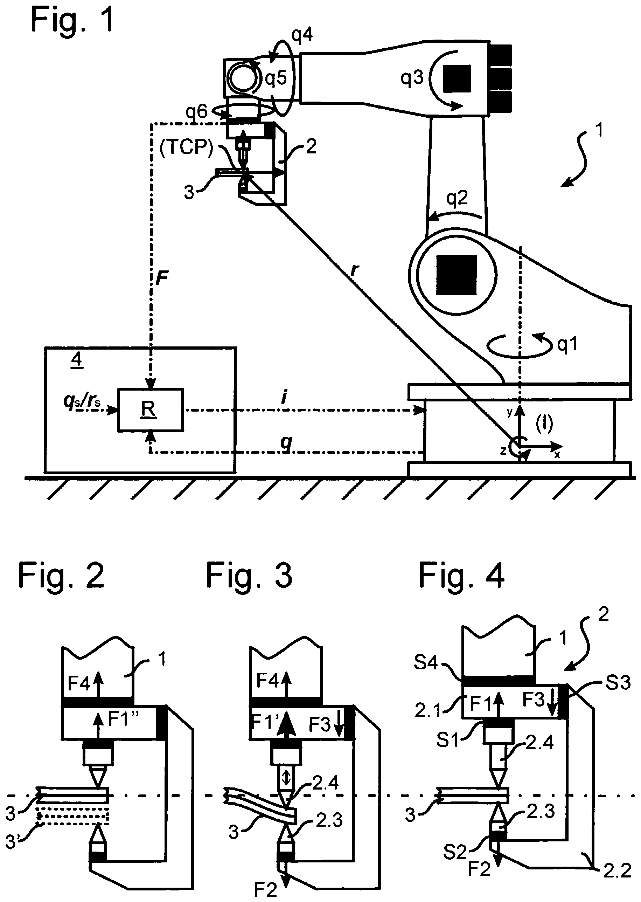

Fig. 1 zeigt einen sechsachsigen Schweißroboter 1 mit einer in den Fig. 2 bis 4 vergrößert dargestellten Schweißzange 2. Eine Steuerung 4 erfasst die Gelenk- bzw. Motorwinkel $q$ = (q1,...,q6) des Knickarmroboters 1, vergleicht diese, gegebenenfalls nach Transformation auf eine kartesische Position $r(q)$, mit einer Soll-Pose $q_s$ bzw. Sollposition $r_s$, und steuert über einen Regler, beispielsweise mit PID-Einzelgelenkreglern, einer Kaskadenregelung und/oder Stromreglern, die Antriebsmotoren des Roboters 1 an, zum Beispiel mittels Vorgabe bzw. Aufprägung entsprechender Ströme $i$.

In Fig. 4 ist die Schweißzange 2 vergrößert dargestellt. Sie umfasst einen mit dem Roboter 1 verbundenen Zangenrahmen 2.1 aus Aluminium und/oder Stahl, einen daran angeordneten Zangenarm 2.2 aus Kupfer, an dem wiederum eine stationäre Schweißelektrode 2.3 angeordnet ist, sowie eine bewegliche Schweißelektrode 2.4, die, beispielsweise mittels eines schematisch angedeuteten Hydraulik-, Pneumatik- oder Elektromotors mit Spindelantrieb, gegen die stationäre Elektrode 2.3 beweg- und preßbar ist, wie insbesondere durch den Doppelpfeil in Fig. 3 angedeutet.

Zur kompakteren Darstellung sind vier Kraftsensoren S1 bis S4 gemeinsam eingezeichnet, wobei, wie nachfolgend erläutert, gemäß bevorzugter Ausführungen beispielsweise nur die Sensoren S1 und S2, die Sensoren S1 und S3, die Sensoren S1 und S4 oder nur der Sensor S4 vorhanden ist.

Der erste Kraftsensor S1 ist zur Erfassung einer Druckkraft F1, F1' bzw. F1" (vgl. Fig. 2 bis 4) von der beweglichen Elektrode 2.4 auf den Zangenrahmen 2.1 vorgesehen, beispielsweise in Form eines Piezosensors zwischen dem Aktuator der beweglichen Elektrode 2.4 und dem Zangenrahmen 2.1 oder der beweglichen Elektrode 2.4 oder in Form von Dehnmessstreifen an der beweglichen Elektrode 2.4 bzw. deren Spindel. Gleichermaßen kann diese Druckkraft beispielsweise auch aus einer Leistungsaufnahme eines Elektromotors zur Bewegung der Elektrode 2.4 ermittelt werden.

Der zweite Kraftsensor S2 ist zur direkten Erfassung einer Druckkraft F2 auf die stationäre Elektrode 2.3 vorgesehen und kann beispielsweise in Form eines Piezosensors zwischen dieser und dem Zangenarm 2.2 ausgebildet sein.

Der dritte Kraftsensor S3 ist zur indirekten Erfassung dieser Druckkraft auf die stationäre Elektrode 2.3 vorgesehen und kann beispielsweise in Form einer Dehnmessstreifenanordnung an dem Zangenarm 2.2 angeordnet sein, um zum Beispiel Biegemomente oder Querkräfte F3 zwischen Zangenarm 2.2 und Zangenrahmen 2.1 zu erfassen, aus denen die Druckkraft F2 auf die stationäre Elektrode 2.3 ermittelt werden kann.

Der vierte Kraftsensor S4 ist zur Erfassung einer Druck- und/oder Zugkraft F4 zwischen dem Zangenrahmen 2.1 und dem Roboter 1 bzw. dessen Werkzeugflansch oder Konsole vorgesehen, beispielsweise in Form eines Piezosensors.

In Fig. 2 ist eine Situation dargestellt, in der zwei miteinander punktzuverschweißende Bleche 3 gegenüber einer strichliert angedeuteten Referenzkonfiguration 3', beispielsweise durch Verformung, ungenaue Positionierung oder dergleichen, versetzt sind, wenn der Schweißroboter 1 die vorgegebene Schweißpose (vgl. Fig. 1) anfährt, i.e. seine Schweißzange 2 bezüglich der Referenzkonfiguration 3' positioniert.

Dabei berührt die noch eingefahrene bewegliche Schweißelektrode 2.4 bereits die versetzten Bleche 3. Daher erfassen die Sensoren S1, S4 eine Druckkraft

$$S1: F1''; \text{ bzw.}$$
$$S4: F4 = F1'' - G$$

mit der Gewichtskraftkomponente G der Schweißzange 2. Wird in dieser Pose des Roboters 1 die Schweißzange 2 noch geschlossen und verspannt, indem der Aktuator der beweglichen Elektrode 2.4 auf diese eine Anpress- bzw. Schweißkraft S aufprägt, werden, wie in Fig. 3 angedeutet, die Bleche 3 verformt (in Fig. 3 übertrieben dargestellt, insbesondere hoch- und höchstfeste Bleche setzen bereits bei geringfügigen Verformungen hohe Reaktionskräfte entgegen). Dann erfassen die Kraftsensoren entsprechende Werte

$$S1: F1' = c \cdot \Delta 3 + S;$$
$$S2: F2 = S;$$
$$S3: F3 = F2 = S; \text{ und}$$
$$S4: F4 = c \cdot \Delta 3 - G$$

mit der Steifigkeit c und Verformung $\Delta 3$ der Bleche 3.

Erfassungswerte $F$ der in einer bevorzugten Ausführung vorgesehenen Sensoren werden jeweils einem Regler R der Steuerung 4 übermittelt. Beispielsweise erhält dieser die Differenz, i.e. vorzeichenbehaftete Summe der Reaktionskräfte auf die beiden Elektroden 2.3, 2.4:

$$\Delta F = S1 - S2 = S1 - S3 = F1'' - 0 = F1'' \qquad \text{(Fig. 2) bzw.}$$
$$= F1' - F2 = c \cdot \Delta 3 \qquad \text{(Fig. 3)}$$

oder die vom Kraftsensor S4 erfasste Summe der auf die Elektroden 2.3, 2.4 aufgeprägten Reaktionskräfte, wobei die Gewichtskraftkomponente G der Schweißzange 2 ausgeblendet wird:

$$F4 = F1'' \quad \text{(Fig. 2) bzw.}$$

$$= c \cdot \Delta 3 \quad \text{(Fig. 3)}$$

Man erkennt, dass durch die Ermittlung einer Summe bzw. Resultierenden $\Delta F$, F4 aus Reaktionskräften F1, F2 bzw. F3 die Schweißkraft S ausgeblendet wird, so dass die verbleibende Summe $\Delta F$, F4 rein aus dem Versatz gegenüber der Referenzschweißposition resultiert und dieser daher auf Basis dieser Summe ausgeregelt werden kann, indem beispielsweise im Regler R ein entsprechender Proportionanteil eingeht:

$$i = P1 \cdot (r_s - r) - P2 \cdot \Delta F \text{ bzw.}$$

$$i = P1 \cdot (r_s - r) - P2 \cdot F4$$

wobei zur Veranschaulichung vereinfachend eine reine kartesische Proportionalregelung zugrundegelegt ist. Man erkennt, dass die Pose des Roboters 1 so verändert, i.e. die Schweißzange 2 in Fig. 1 bis 4 angehoben wird (vgl. Fig. 2, 3 → Fig. 4 und die strichpunktiert eingezeichnete Werkstückebene), dass die Summe $\Delta F$ bzw. F4 verschwindet. Auf diese Weise kann trotz Versatz des Werkstücks 3 mit der beidseitig durch die Elektroden 2.3, 2.4 aufgeprägten Schweißkraft S korrekt geschweißt werden.

Wie sich aus obigen Erläuterungen ergibt, reicht Sensor S4 zwischen Schweißzange 2 und Roboter 1 zur Kompensation des Versatzes aus. In einer bevorzugten Weiterbildung ist jedoch auch hier wenigstens einer der Sensoren S1, S2 oder S3 vorgesehen, um die Schweißkraft S erfassen und somit durch entsprechende Ansteuerung des Aktuators der beweglichen Schweißelektrode 2.4 regeln zu können. Die vorstehend erläuterte Regelung des Schweißroboters 1 auf Basis der ermittelten Summe von Reaktionskräften erfolgt in einer bevorzugten Ausführung nur in der Nähe der einzelnen Schweißposen, wo es zu einem Kontakt zwischen den Schweißelektroden 2.3, 2.4 und einem versetzten Werkstück 3 kommen kann, während dazwischen der Roboter 1 beispielsweise steif positionsgeregelt präzise die nächste Schweißpose anfahren kann.

Wie durch die Vektorschreibweise angedeutet, kann die Regelung in einer oder mehreren Richtungen der Komponenten der Reaktionskräfte, insbesondere in Schließrichtung der Schweißzange 2 und/oder senkrecht hierzu erfolgen.

Bezugszeichenliste

| | |
|---|---|
| 1 | Roboter |
| 2 | Schweißzange |
| 2.1 | Zangenrahmen |
| 2.2 | Zangenarm |
| 2.3 | stationäre Elektrode |
| 2.4 | bewegliche Elektrode |
| 3/3' | Werkstücke (Bleche)/Referenzkonfiguration |
| 4 | Robotersteuerung |
| S1,...S4 | Kraftsensor |
| F1,...F4 | Kraft |

**Patentansprüche**

1. Verfahren zur Steuerung einer Positioniervorrichtung, insbesondere eines Schweißroboters (1), zum Schweißen mit einer Schweißzange (2) und wenigstens einer Krafterfassungseinrichtung (S1, S2, S3, S4) zur Erfassung von Reaktionskräften (F1, F1', F1'', F2) auf die Schweißzange, **gekennzeichnet durch** die Schritte:

Ermitteln einer Summe ($\Delta$F; F4) von Reaktionskräften (F1, F1', F1", F2, F3, F4) auf die Schweißzange (2); und
Regelung der Pose der Positioniervorrichtung (1) auf Basis der ermittelten Summe von Reaktionskräften ($\Delta$F; F4),
wobei die Summe von Reaktionskräften (F4) auf Basis einer Kraft ermittelt wird,
die zwischen der Schweißzange (2) und einer Lagerung der Schweißzange,
insbesondere zwischen der Schweißzange (2) und der Positioniervorrichtung (1), wirkt.

2. Verfahren nach Anspruch 1, **dadurch gekennzeichnet, dass** die Summe von Reaktionskräften ($\Delta$F) auf Basis einer Differenz (F1$^{(',\,'')}$-F2; F1$^{(',\,'')}$-F3) zwischen Reaktionskräften (F1, F2; F1, F3) ermittelt wird, die auf zwei Elektroden (2.3, 2.4) der Schweißzange (2) wirken.

3. Verfahren nach einem der vorhergehenden Ansprüche, **dadurch gekennzeichnet, dass** eine Pose der Positioniervorrichtung (1) so geregelt wird, dass die Differenz ($\Delta$F) zwischen Reaktionskräften und/oder die Kraft (F4), die zwischen der Schweißzange (2) und ihrer Lagerung wirkt, verringert wird.

4. Verfahren nach einem der vorhergehenden Ansprüche, **dadurch gekennzeichnet, dass** eine Schweißkraft (S) ermittelt und geregelt wird.

5. Verfahren nach Anspruch 4, **dadurch gekennzeichnet, dass** die Schweißkraft (S) auf Basis von Reaktionskräften (F1, F1', F1", F2, F3) ermittelt wird, die auch zum Ermitteln der Summe ($\Delta$F; F4) von Reaktionskräften ermittelt werden.

6. Verfahren nach einem der vorhergehenden Ansprüche, **dadurch gekennzeichnet, dass** Reaktionskräfte mittels wenigstens eines Drucksensors, insbesondere Piezosensors (S1, S2, S4), Verformungssensors, insbesondere Dehnmessstreifens (S3), und/oder Energiesensors, insbesondere Stromsensors (S1) ermittelt wird.

7. Vorrichtung (4) zur Steuerung einer Positioniervorrichtung, insbesondere eines Schweißroboters (1), zum Schweißen mit einer Schweißzange (2), wobei die Vorrichtung wenigstens eine Krafterfassungseinrichtung (S1, S2, S3, S4) zur Erfassung von Reaktionskräften (F1, F1', F1", F2) auf die Schweißzange umfasst, **dadurch gekennzeichnet, dass** sie einen Regler (R) umfasst, der zur Durchführung eines Verfahrens nach einem der vorhergehenden Ansprüche eingerichtet ist.

8. Computerprogramm, umfassend Befehle, die bewirken, dass die Vorrichtung nach Anspruch 7 ein Verfahren nach einem der Ansprüche 1 bis 6 ausführt, wenn das Programm in einer Vorrichtung nach Anspruch 7 abläuft.

9. Computerprogrammprodukt mit Programmcode, der auf einem maschinenlesbaren Träger gespeichert ist und ein Computerprogramm nach Anspruch 8 umfasst.

**Claims**

1. A method of controlling a positioning device, in particular of a welding robot (1), for welding with an welding gun (2) and at least one force detection device (S1, S2, S3, S4) for detecting reaction forces (F1, F1', F1", F2) on the welding gun, **characterized by** the steps of:

determining a sum ($\Delta$F; F4) of reaction forces (F1, F1', F1", F2, F3, F4) on the welding gun (2); and
controlling the pose of the positioning device (1) on the basis of the determined sum of reaction forces ($\Delta$F; F4),
wherein the sum of reaction forces (F4) is determined on the basis of a force which acts between the welding gun (2) and a support of the welding gun, in particular between the welding gun (2) and the positioning device (1).

2. The method according to claim 1, **characterized in that** the sum of reaction forces ($\Delta$F) is determined on the basis of a difference (F1$^{(',\,'')}$-F2; F1$^{(',\,'')}$-F3) between reaction forces (F1, F2; F1, F3) which act on two electrodes (2.3, 2.4) of the welding gun (2).

3. The method according to any one of the preceding claims, **characterized in that** a pose of the positioning device (1) is controlled such that the difference ($\Delta$F) between reaction forces and/or the force (F4) which acts between the welding gun (2) and its support is reduced.

4. The method according to any one of the preceding claims, **characterized in that** a welding force (S) is determined and controlled.

5. The method according to claim 4, **characterized in that** the welding force (S) is determined on the basis of reaction forces (F1, F1', F1", F2, F3) which are also used for determining the sum ($\Delta F$; F4) of reaction forces.

6. The method according to any one of the preceding claims, **characterized in that** reaction forces are determined by means of at least one pressure sensor, in particular a piezo sensor (S1, S2, S4), at least one deformation sensor, in particular a strain gauge (S3) and/or at least one energy sensor, in particular a current sensor (S1).

7. A device (4) for controlling a positioning device, in particular a welding robot (1), for welding with an welding gun (2), wherein the device comprises at least one force detection device (S1, S2, S3, S4) for detecting reaction forces (F1, F1', F1", F2) on the welding gun,
**characterized in that** it comprises a controller (R) which is arranged for carrying out a method according to any one of the preceding claims.

8. A computer program, comprising programming instructions which cause the device according to claim 7 to carry out a method according to any one of the claims 1 to 6 when the program is run on a device according to claim 7.

9. A computer program product with programming code which is stored on a machine-readable medium and which comprises a computer program according to claim 8.


## Revendications

1. Procédé de commande d'un dispositif de positionnement, en particulier d'un robot de soudage (1), pour le soudage avec une pince de soudage (2) et au moins un dispositif de détection de force (S1, S2, S3, S4) pour la détection de forces de réaction (F1, F1', F1", F2) sur la pince de soudage, **caractérisé par** les étapes de :

   détermination d'une somme ($\Delta F$ ; F4) de forces de réaction (F1, F1', F1", F2, F3, F4) sur la pince de soudage (2) ; et
   réglage de la pose du dispositif de positionnement (1) sur la base de la somme déterminée de forces de réaction ($\Delta F$ ; F4),
   dans lequel la somme de forces de réaction (F4) est déterminée sur la base d'une force, qui agit entre la pince de soudage (2) et un palier de la pince de soudage, en particulier entre la pince de soudage (2) et le dispositif de positionnement (1).

2. Procédé selon la revendication 1, **caractérisé en ce que** la somme de forces de réaction ($\Delta F$) est déterminée sur la base d'une différence (F1$^{(',")}$-F2 ; F1$^{(',")}$-F3) entre des forces de réaction (F1, F2 ; F1, F3), qui agissent sur deux électrodes (2.3, 2.4) de la pince de soudage (2).

3. Procédé selon l'une quelconque des revendications précédentes, **caractérisé en ce qu'**une pose du dispositif de positionnement (1) est réglée de sorte que la différence ($\Delta F$) entre des forces de réaction et/ou la force (F4), qui agit entre la pince de soudage (2) et son palier, est réduite.

4. Procédé selon l'une quelconque des revendications précédentes, **caractérisé en ce qu'**une force de soudage (S) est déterminée et réglée.

5. Procédé selon la revendication 4, **caractérisé en ce que** la force de soudage (S) est déterminée sur la base de forces de réaction (F1, F1', F1", F2, F3) qui sont également déterminées pour la détermination de la somme ($\Delta F$ ; F4) de forces de réaction.

6. Procédé selon l'une quelconque des revendications précédentes, **caractérisé en ce que** les forces de réaction est déterminée au moyen d'au moins un capteur de pression, en particulier capteur piézo (S1, S2, S4), capteur de déformation, en particulier jauge de contrainte (S3), et/ou capteur d'énergie, en particulier capteur de courant (S1).

7. Dispositif (4) de commande d'un dispositif de positionnement, en particulier d'un robot de soudage (1), pour le soudage avec une pince de soudage (2), dans lequel le dispositif comprend au moins un dispositif de détection de force (S1, S2, S3, S4) pour la détection de forces de réaction (F1, F1', F1", F2) sur la pince de soudage, **caractérisé**

**en ce qu'**il comprend un régulateur (R) qui est aménagé pour la réalisation d'un procédé selon l'une quelconque des revendications précédentes.

8. Programme informatique, comprenant des ordres, qui font que le dispositif selon la revendication 7 effectue un procédé selon l'une quelconque des revendications 1 à 6, lorsque le programme est exécuté dans un dispositif selon la revendication 7.

9. Produit de programme informatique avec code de programme, qui est enregistré sur un support lisible par machine et comprend un programme informatique selon la revendication 8.

# Fig. 1

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1508396 B1
- DE 102009018403
- EP 1005943 A2